(19)

Europäisches
Patentamt
European
Patent Office
Office européen
des brevets

(11) **EP 2 420 762 A2**

(12) **EUROPEAN PATENT APPLICATION**

(43) Date of publication:
**22.02.2012 Bulletin 2012/08**

(51) Int Cl.:
***F25B 21/00*** *(2006.01)*

(21) Application number: **11174566.7**

(22) Date of filing: **19.07.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **28.07.2010 US 845017**

(71) Applicant: **General Electric Company
Schenectady, NY 12345 (US)**

(72) Inventors:
 • **Subramaninan, Pradip Radhakrishnan
  Niskayuna, NY 12309 (US)**

 • **Menon, Shishir Chandrasekhar
  Niskayuna, NY 12309 (US)**
 • **Samiappan, Chandrasekhar
  400 072 Mumbai (IN)**
 • **Barve, Jayeshkumar Jayanarayan
  Niskayuna, NY 12309 (US)**

(74) Representative: **Illingworth-Law, William
Illingworth
Global Patent Operation - Europe
GE International Inc.
15 John Adam Street
London WC2N 6LU (GB)**

(54) **Cooling system of an electromagnet assembly**

(57)    An assembly (100, 400) for a magnetocaloric refrigeration unit includes a magnetocaloric core (102, 402). Electromagnetic coils (104, 406) may be wound around the magnetocaloric core (102, 402). The assembly (100, 400) further includes one or more cooling structures (1608) to extract the waste heat generated from the electromagnet coils (104, 406). In some embodiments, the assembly may include one or more magnetic yokes (106, 408) disposed at the longitudinal ends of the magnetocaloric core (102, 402). At least one of the top surface and the bottom surface of the magnetic yoke (106, 408) is provided with a micro-channel structure (202). In other embodiments, the assembly may include a coil housing (108, 410) disposed around the electromagnet coil (104, 406). The coil (108, 410) housing includes cooling structures (1608) such as, but not limited to, a microchannel structure, a fm structure, and a heat pipe structure.

FIG. 1

EP 2 420 762 A2

**Description**

Embodiments presented herein relate generally to electromagnet assemblies, and more specifically to electromagnet assemblies for a magnetocaloric refrigeration system.

Magnetocaloric refrigeration is based on alternate magnetization and demagnetization of a magnetocaloric material. While operating about Curie temperature, the magnetocaloric materials warm up when magnetized and cool down on demagnetization. A refrigerant may absorb heat from the magnetized magnetocaloric material and release the heat to the environment in one step of the refrigeration cycle. Similarly in another step of the refrigeration cycle, the refrigerant may absorb heat from a refrigerated enclosure and release the heat to the demagnetized magnetocaloric material.

In a magnetocaloric refrigeration unit, the alternate magnetization and demagnetization of the magnetocaloric material may be achieved by one or more electromagnets. Typically, the electromagnets generate heat by passing alternating current through the conducting coils. The generated heat may cause reduce the life of the current carrying coils of the electromagnets. Further, the heat from the current carrying coils may be transferred to the magnetocaloric material and may heat the magnetocaloric material beyond the Curie temperature.

However, for stable operation of the magnetocaloric refrigeration unit, the magnetocaloric material must be maintained at or around the Curie temperature of the magnetocaloric material. Active cooling methods such as liquid cooling and forced air cooling may be employed to cool the electromagnets of the magnetocaloric refrigeration unit. However, excessive cooling of the electromagnets may take away heat from the magnetocaloric material, thus causing the temperature of the magnetocaloric material to fall below the Curie temperature.

Therefore, there is a need for an improved system to regulate the cooling of an electromagnet assembly in a magnetocaloric refrigeration unit.

BRIEF DESCRIPTION

An assembly for magnetocaloric cooling includes a magnetocaloric core, one or more electromagnet coil wound around the magnetocaloric core, and one or more magnetic yokes having a top surface and a bottom surface disposed at longitudinal ends of the magnetocaloric core. At least one of the top surface and the bottom surface of the magnetic yokes has disposed thereon a micro-channel structure. The magnetic yokes are thermally coupled to the electromagnet coil and are thermally isolated from the magnetocaloric core.

An assembly for magnetocaloric cooling includes one or more magnetocaloric cores, and one or more electromagnet coil wound around the one or more magnetocaloric cores. The one or more electromagnet coils are thermally isolated from the one or more magnetocaloric cores. The assembly further includes a coil housing disposed around the one or more electromagnet coils. The coil housing includes a cooling structure disposed thereon, wherein the coil housing comprises a magnetic material.

A magnetocaloric cooling system includes a magnetocaloric heat pump which includes one or more magnetocaloric cores, one or more electromagnet coils wound around the one or more magnetocaloric cores, and an electromagnet cooling structure for extracting waste heat from the one or more electromagnet coils, thermally coupled to the one or more electromagnet coils and thermally isolated from the one or more magnetocaloric cores. The system further includes a source heat exchanger thermally coupled to the one or more magnetocaloric cores, and a sink heat exchanger thermally coupled to the one or more magnetocaloric cores. An energizing module supplies a time varying electrical current to the one or more electromagnet coils. A waste heat disposal module coupled to the electromagnet cooling structure rejects the waste heat generated by the electromagnet coils, to environment.

BREIF DESCRIPTION OF THE DRAWINGS

FIG. 1 illustrates an example electromagnet assembly according to one embodiment;

FIG. 2 illustrates a yoke of an electromagnet assembly according to one embodiment;

FIG. 3 illustrates a section view of the yoke of the electromagnet assembly according to one embodiment;

FIG. 4 illustrates an example electromagnet assembly according to another embodiment;

FIG. 5 - FIG. 8 illustrate various designs of cooling fms disposed on a yoke of the electromagnet assembly according to various embodiments;

FIG. 9 - FIG. 15 illustrate various designs of cooling fins disposed on a cooling structure of the electromagnet assembly according to various embodiments; and

FIG. 16 illustrates an example magnetocaloric cooling system according to one embodiment.

DETAILED DESCRIPTION OF THE EMBODIMENTS

An assembly for a magnetocaloric refrigeration unit is disclosed. Magnetocaloric refrigeration is based on cyclic adiabatic magnetization and demagnetization of magnetocaloric (MC) materials while keeping the MC materials at their Curie temperature. The MC materials warm up when they are magnetized and cool down when demagnetized.

In an embodiment, a magnetocaloric refrigeration unit may include a plurality of magnetocaloric modules each including an MC material with a specific Curie temperature. The Curie temperature of MC materials for each magnetocaloric module may be suitably selected so that the successive modules provide a wide range of operating temperature.

In each of the magnetocaloric modules, the MC material may be magnetized by an electromagnet assembly. The electromagnet assembly may include one or more electromagnet coils that are wound around a core. In one embodiment, the core may be made of the MC material. In one example implementation, the MC material is periodically magnetized and demagnetized by energizing the electromagnet coils with a square wave electrical signal of suitable frequency and amplitude. The passage of electrical current through the electromagnet coils causes the electromagnet coils to heat up. Such heating may affect the MC material, and may destabilize the operation of the magnetocaloric module. Embodiments described herein disclose a system for removing the heat generated by the electromagnet assembly such that the MC materials maintained at or around respective Curie temperature.

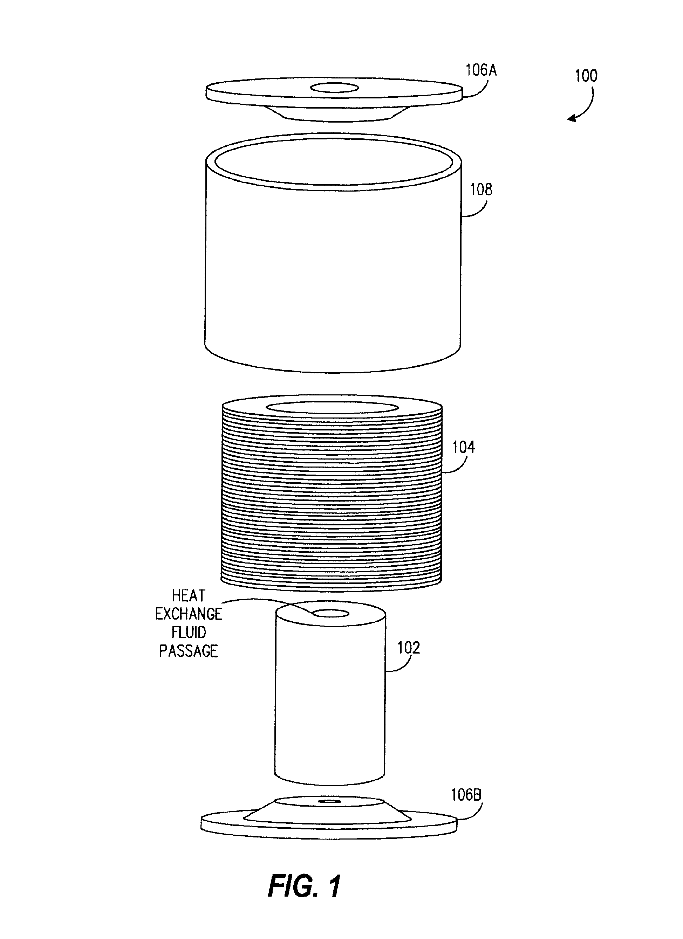

FIG. 1 illustrates an example assembly 100 for use in a magnetocaloric refrigeration unit, according to one embodiment. The electromagnet assembly 100 includes a core 102, one or more electromagnet coils 104, and one or more magnetic yokes 106. The assembly 100 may further include a coil housing 108.

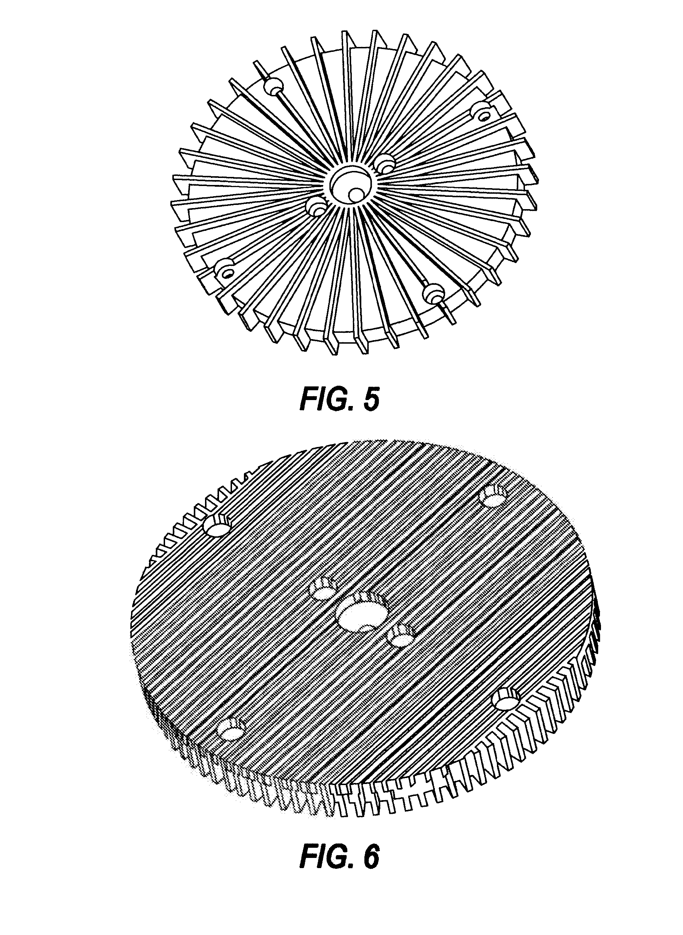

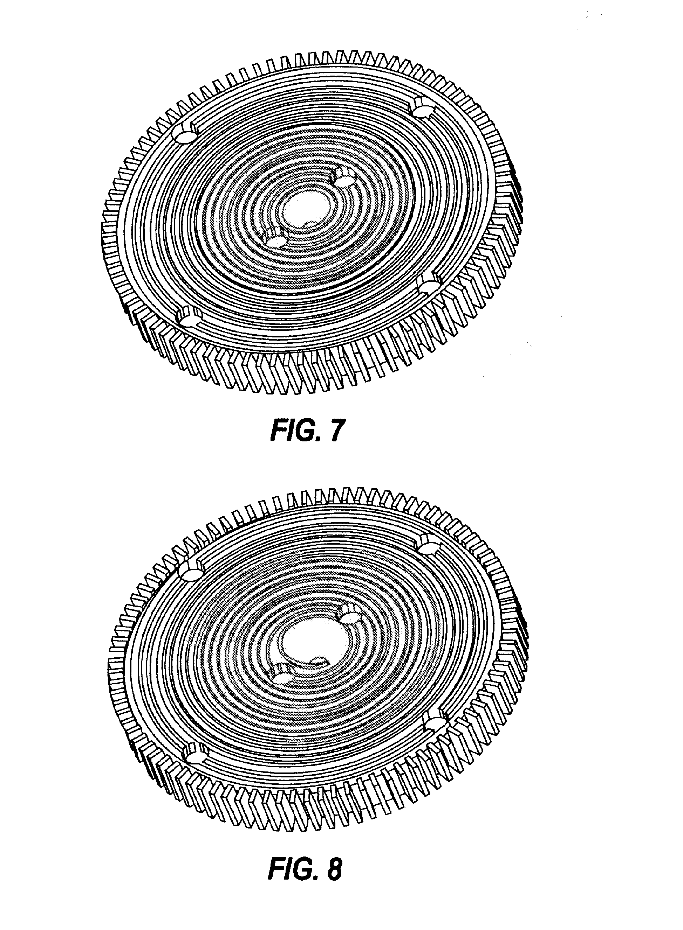

In the embodiment illustrated in FIG. 1, the core 102 may be made of a magnetocaloric material. Exemplary magnetocaloric materials include gadolinium, lanthanum, manganese, praseodymium, and their alloys. The core 102 may include at least one passage for the flow of a heat exchange fluid. The electromagnet coils 104 may be wound around the core 102. The electromagnet coils 104 may be made of a suitable conductor such as, but not limited to, laminated copper wire. The electromagnet coils 104 may not be in direct physical contact with the core 102. Such an arrangement reduces heat conduction from the electromagnet coils 104 to the core 102. The electromagnet coils 104 may be thermally isolated from the core 102 by inserting a suitable heat insulating material between the core 102 and the electromagnet coils 104. The magnetic yokes 106 may be disposed at longitudinal ends of the core 102. The magnetic yokes 106 may be made of a suitable ferromagnetic material such as soft iron. The magnetic yokes 106 may have disposed thereon a micro-channel structure. The micro-channel structure provides coolant flow through the magnetic yokes 106, thus removing heat generated by the electromagnet coils 104 due to passage of electric current. The yokes 106 may be thermally coupled to the electromagnet coils 104 for efficiently removing the heat generated thereon. Further, the yokes 106 may be thermally isolated from the core 102. The thermal isolation may be achieved by inserting a suitable thermal insulator between the yokes 106 and the core 102. Alternatively, the thermal isolation may be achieved by providing an air gap between the yokes 106 and the core 102. Exemplary magnetic yokes are described in conjunction with FIGS. 5 - 8.

The assembly 100 may further include the coil housing 108. The enclosure 108 encloses the electromagnet coils 104 wound around the core 102. In one embodiment, the coil housing 108 may be made of a heat conducting material such as, but not limited to, aluminium, copper, and so forth. In another embodiment, the coil housing 108 is made of a magnetic material. Exemplary magnetic materials include soft iron, cobalt, nickel, and alloys thereof. In some embodiments, the coil housing 108 may be provided with a cooling structure. In one embodiment, the cooling structure may be an integral part of the outer surface of the coil housing 108. In an alternate embodiment, a separately designed cooling structure may be disposed circumferentially around the coil housing 108. Such a separate cooling structure may be thermally coupled to the coil housing 108 either by mechanical pressure, or by a suitable thermal compound.

The cooling structure may include fins. Depending on the cooling requirement of the assembly 100, the fins disposed on the cooling structure may be configured for natural convection cooling, or forced convection cooling. For example, closely spaced fins may be used for forced convection cooling, while widely spaced fins may be used for natural convection cooling.

Alternatively, the cooling structure may include a micro-channel structure. The micro-channel structures may be helically disposed on the outer surface of the cooling structure. A coolant may be passed through the micro-channel structure to remove waste heat from the assembly 100. Depending on the cooling requirements, the coolant may be a gas such as, but not limited to, compressed air, or compressed nitrogen; or may be a liquid such as, but not limited to, water, ethylene glycol, propylene glycol, methanol, and mixtures thereof. The liquid coolant may include other additives such as corrosion inhibitors.

In yet another implementation, the cooling structure may include a heat pipe structure. The heat pipe structure is a sealed, evacuated tube structure made of metals such as, but not limited to, copper, and aluminum, filled with a suitable working fluid. The working fluid may be selected depending on the cooling requirement of the assembly 100. For example, working fluids may include liquid helium for extremely low temperatures, mercury for high temperatures, and ethanol, methanol, water and ammonia for moderate temperatures.

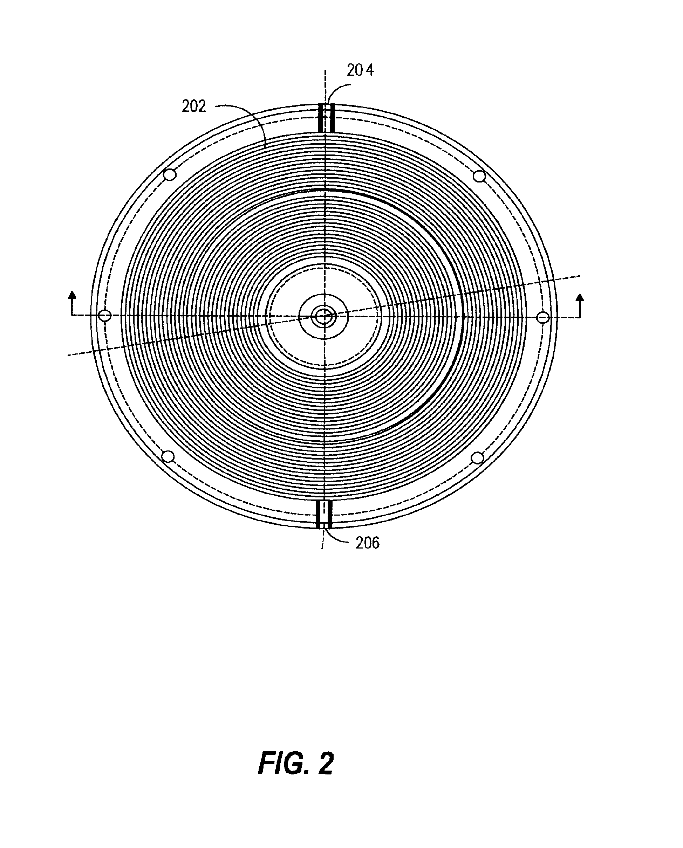

FIG. 2 illustrates a top view of the yoke 106, according to one embodiment. The yoke 106 includes a micro-channel structure 202. In an embodiment, the micro-channel structure 202 may include spiral micro-channels. In an alternate embodiment, the micro-channel structure 202 may include at least one of radial micro-channels and a plurality of closely spaced studs or pins. The pins or studs may be arranged to provide a directional path for coolant flow along the upper surface of the yoke 106. The studs may be provided on the surface such that the transfer of heat along the upper surface of the yoke 106 may be in the desired direction. Said studs or pins may be arranged on the yoke 106 in definite shapes such as, but not limiting to, a circle, a hexagon, a square a rectangle, and the like. In an alternate embodiment, the studs or pins may act as fins for transferring heat to the surroundings. The cross sections of the pins or studs may be suitably chosen. In various embodiments, the cross sections of said studs or pins may be circular, hexagonal, rectangular, square, and the like.

In some embodiments, the micro-channel structure 202 may be disposed on either the top surface or the bottom surface of yoke 106. In other embodiments, both the top surface and the bottom surface of the yoke 106 may be provided with the micro-channel structure 202. In one embodiment, the micro-channel structure 202 may be made of a non-magnetic material. The micro-channel structure 202 may provide coolant flow to extract the heat generated by the electromagnet coils 104 due to passage of electric current. Depending on the cooling requirements, the coolant may be a gas such as, but not limited to, compressed air, or compressed nitrogen; or a liquid such as, but not limited to, water, ethylene glycol, propylene glycol, methanol, and mixtures thereof. The liquid coolant may include other additives such as corrosion inhibitors.

The micro-channel structure 202 may include a plurality of inlet ports 204 and outlet ports 206 for the coolant flow. In one embodiment, the micro-channel structure 202 may be configured to circulate a coolant from the center of the yoke 106 towards the circumference of the yoke 106. In such an implementation, the inlet ports 204 are provided near the center of the yoke 106 and the outlet ports 206 may be disposed near the circumference of the yoke 106. The direction of flow of the coolant through the micro-channel structure 202 may be selected to provide an optimum temperature gradient across the yoke 106. For example, a flow from the center of the yoke 106 towards the circumference of the yoke 106 may provide a temperature gradient where the yoke 106 is coolest at the center, and warmest at the circumference. Such a temperature gradient may minimize or prevent heat transfer to the core 102. The micro-channel structure 202 may further have a plurality of inlets and a plurality of outlets placed on suitable locations within the yoke 106, to obtain a desired temperature gradient across the yoke 106.

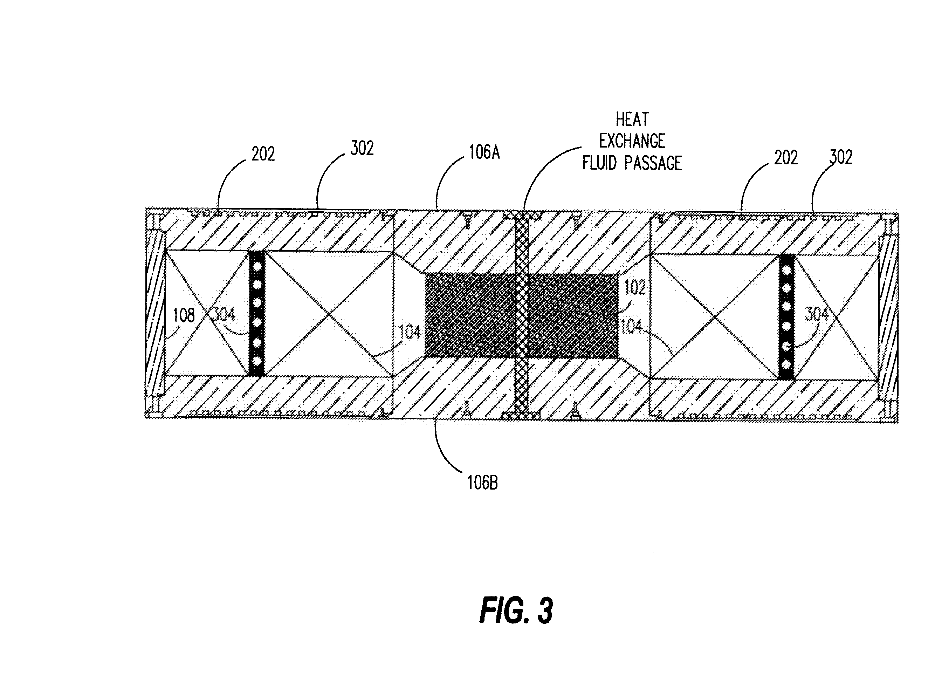

FIG. 3 illustrates a cross-sectional view of the assembly 100, according to one embodiment. FIG. 3 illustrates a micro-channel structure 202 disposed on a surface of the yoke 106. In an embodiment, the micro-channel structure 202 may be covered by a plate 302. In the embodiment illustrated, the micro-channel structure 202 includes spiral micro-channels. The assembly 100 may further include one or more coolant tubes 304 disposed circumferentially around the electromagnet coils 104. The coolant tubes 304 may provide coolant flow to extract the heat generated by the electromagnet coils 104 due to the passage of electric current. The coolant tubes 304 may be thermally coupled to the electromagnet coil 104 for effective transfer of heat.

Depending on the cooling requirements, the coolant may be a liquid such as, but not limited to, water, ethylene glycol, propylene glycol, methanol, and mixtures thereof. The coolant may include other additives such as corrosion inhibitors.

The micro-channel structure 202 and the coolant tubes 304 may be connected to a waste heat removal system. The waste heat removal system may include a coolant reservoir, a radiator, and one or more manifolds for providing flow of the coolant to and from the assembly 100. The manifolds may include valves to regulate flow of the coolant, under manual or automatic control.

In various embodiments, the assembly 100 may include a flow regulating module to regulate the flow of the coolant through the micro-channel structure 202 and the coolant tubes 304. The flow regulating module may include temperature sensors for sensing the temperature of the coolant, the electromagnet coils 104, and the yoke 106. The flow regulating module may also include a processor for computing power dissipated as heat from the electromagnet coils 104 due to the passage of electrical current, by measuring the current passing through the electromagnet coil 104s, and using the formula:

$$H = I^2 R \text{ watts } \dots \text{ Equation 1}$$

where H is the heat produced, I is the electrical current, and R is the electrical resistance of the electromagnet coils 104. The value of the electrical resistance may be stored in a memory of the flow regulating module. The flow regulating module may then control the manifold valves, based on the computed heating or the sensed temperatures, to regulate the flow of the coolant. In various embodiments, the flow regulating module may be a microprocessor or microcontroller based system for controlling one or more of solenoid manifold valves, speed of a coolant pump, speed of radiator fan, and so forth.

According to various embodiments, a magnetocaloric refrigeration unit may have a plurality of assemblies 100 stacked, one on top of the other. Each assembly 100 may have a core 102 made of a different magnetocaloric material. In one embodiment, each assembly 100 of the magnetocaloric refrigeration unit may have dedicated flow regulating module independent of other such assemblies 100. In such an implementation, each assembly 100 may include the flow regulating module. The flow of a coolant in the micro-channel structure 202, and the coolant tubes 304 may be controlled by the regulating module associated with the particular assembly 100.

In another embodiment, a central flow regulating module may regulate the flow of the coolant in each of the plurality of assemblies 100. Such a central flow regulating module may determine the temperature and/or heating of each assembly 100 independently, and control the corresponding manifold valve to regulate the flow of the coolant.

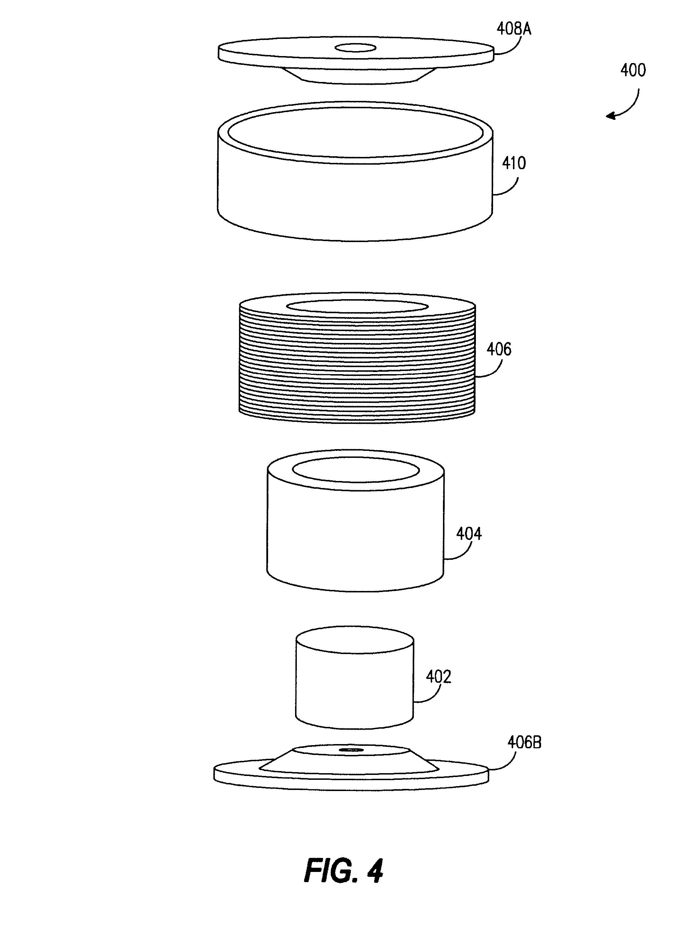

FIG. 4 illustrates an example assembly 400 for use in a magnetocaloric refrigeration unit, according to one embodiment. The assembly 400 includes a core 402, a spacer 404, one or more electromagnet coils 406, and one or more magnetic yokes 408. The assembly 400 may also include a coil housing 410.

In one embodiment, the spacer 404 may be a hollow cylinder. However, it will be appreciated that hollow tubes having for example, a square, rectangular, hexagonal cross section may also be used. The spacer 404 forms an enclosure within which a magnetocaloric regenerator may be disposed. The spacer 404 may be made of a suitable non-magnetic and thermally insulating material such as, but not limited to, Teflon, Delrin, ABS, PVC, Nylon and so forth. The electromagnet coils 406 may be wound around the spacer 404. Such an arrangement facilitates modular construction of a magnetocaloric refrigeration unit. The electromagnet (i.e. assembly 400) may be connected to the magnetocaloric core such that the two may be engaged and disengaged with minimal disassembly. The electromagnet coils 406, the yokes 408, and the coil housing 410 are similar to those described above, in conjunction with FIG. 1, FIG. 2, and FIG. 3.

FIGS. 5 - 8 illustrate exemplary yokes 500, 600, 700, and 800, according to various embodiments. Yokes 500, 600, 700, and 800 include a plurality of fins thereon. The fins may have suitable cross-sections such as, but not limited to, circular cross-section, a rectangular cross-section, a square cross-section, a hexagonal cross-section, and the like. The fms may be disposed on the top surface, on the periphery of the yokes, or on both. The fins provide a large surface for heat transfer to the surroundings by natural convection or forced air cooling. The yoke 500 includes fins disposed in the radial direction. The yoke 600 includes fins disposed in longitudinal direction across the surface. The yokes 700 and 800 include circular fins disposed on the surface. In some embodiments, the yokes may include a micro-fin structure.

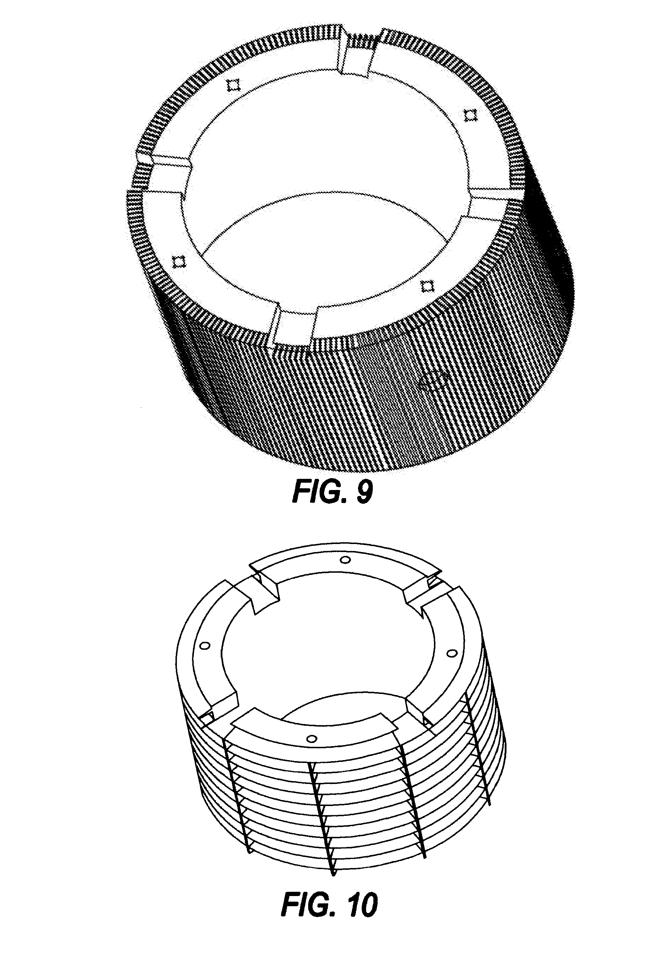

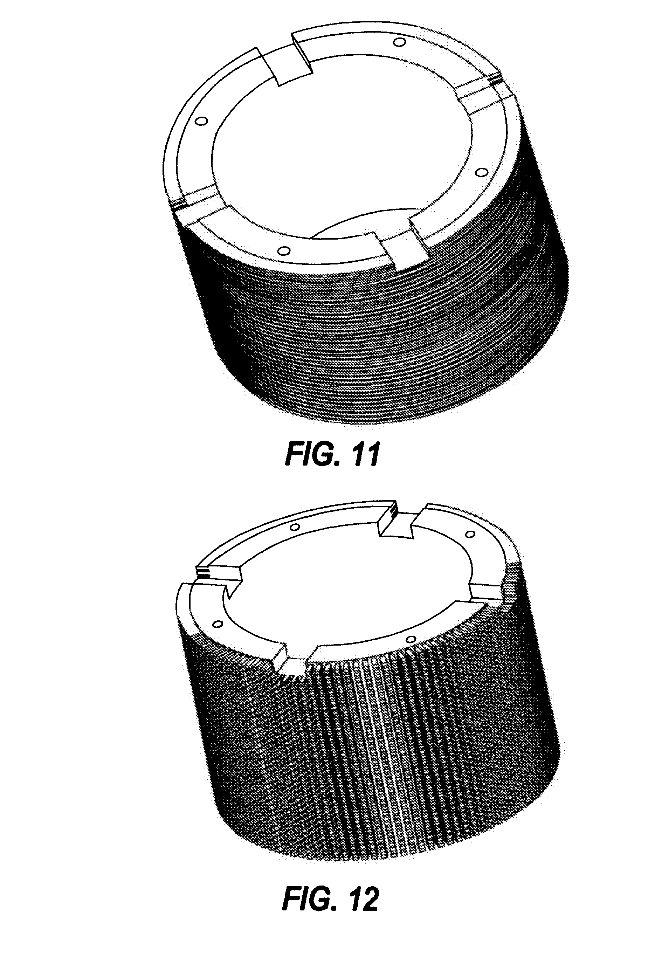

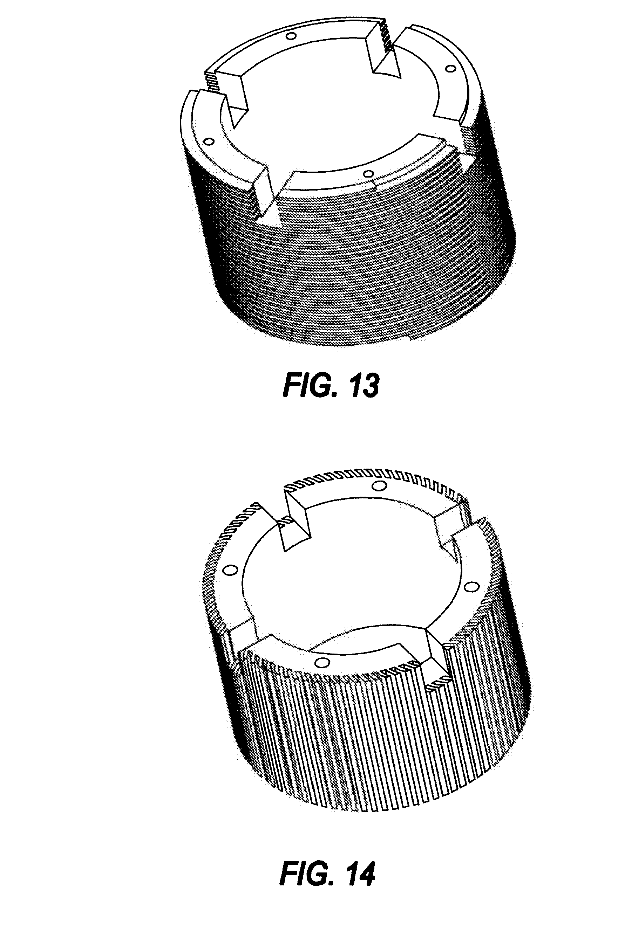

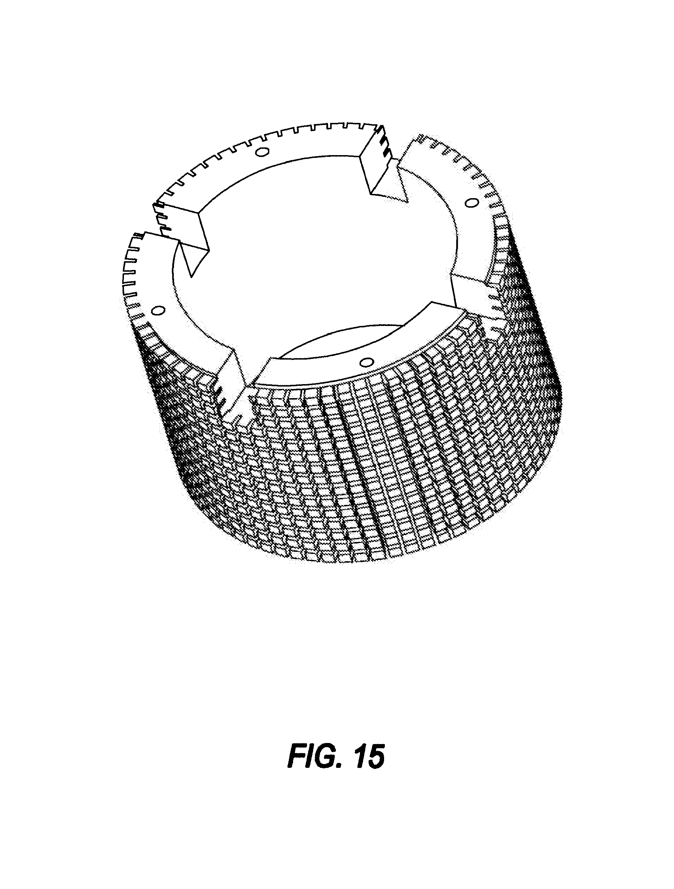

FIGS. 9 - 15 illustrate exemplary cooling structures according to various embodiments. The exemplary cooling structures include at least one of fins and micro-channel structures disposed on the outer surface. The micro-channel structures may, without limitation include helically disposed on the outer surface of the cooling structure. The fins include, without limitation, automotive radiator type fins, vertical fins, peripheral fms, cross hatch fins, thread pattern fins, helix based fins and pin cluster fins, and so forth. The fins may have suitable cross-sections such as, but not limited to, circular cross-section, a rectangular cross-section, a square cross-section, a hexagonal cross-section, and the like. The fins facilitate the transfer of heat to the surroundings by natural convection or by forced air cooling. The cooling structures described herein, and the fins may be made of a suitable heat radiating material such as, but not limited to, aluminium, and copper. The fins provide a large surface for effective heat transfer to the surroundings.

In one embodiment, a thermal interface material may be applied to the inner surface of the cooling structures to facilitate the conduction of heat from the electromagnet coils 104 and 406 to the cooling structures. The thermal interface material includes, without limitation, metallic foam, thermal paste, thermal adhesive tape, and so forth.

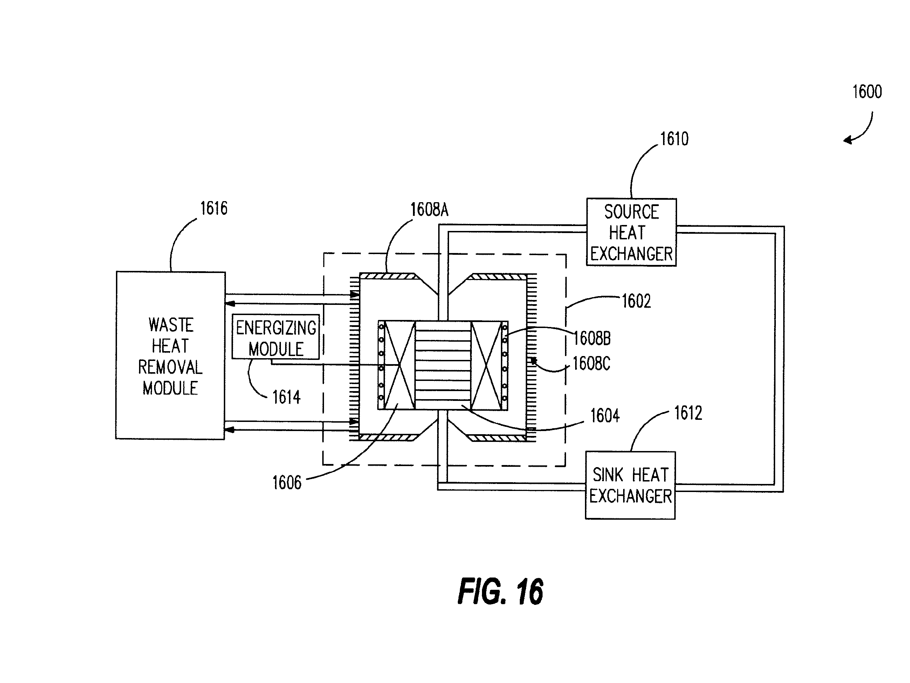

FIG. 16 illustrates an example magnetocaloric cooling system 1600 according to one embodiment. The magnetocaloric cooling system 1600 includes a magnetocaloric heat pump 1602, which further includes one or more magnetocaloric cores 1604, an electromagnet coil 1606, and one or more electromagnet cooling structures 1608. The magnetocaloric cooling system 1600 further includes a source heat exchanger 1610, a sink heat exchanger 1612, an energizing module 1614, and a waste heat disposal system 1616.

The magentocaloric heat pump 1602 is similar to the assemblies 100, and 400 described above in conjunction with FIG. 1, and FIG. 4 respectively. The electromagnet cooling structures 1608 may be a microchannel structure, a fin structure, a coolant tube structure, or a heat pipe structure. Example cooling structures are described in conjunction with FIG. 3, and FIGS. 5 - 15. Although FIG. 16 illustrates a single magnetocaloric heat pump 1602, it will be appreciated that multiple magnetocaloric heat pumps may also be employed in the cooling system 1600, as per the requirements of the cooling system 1600.

The cooling system 1600 may extract heat from a source through the source heat exchanger 1610, and transfers it to the environment through the sink heat exchanger 1612. The energizing module 1614 supplies cyclic electrical current to cyclically energise and deenergise the electromagnet coil 1606 to magnetise and demagnetize magnetocaloric cores 1604 at a predetermined operating frequency.

The waste heat disposal system 1616 rejects the waste heat generated by the electromagnet coils 1606, and extracted by the electromagnet cooling structures 1608. The waste heat disposal system 1606 may include suitable heat transfer systems such as liquid-to-air radiators, heat pipes, evaporative coolers, and so forth.

Various embodiments presented herein describe a compact cooling system for an electromagnet assembly for use in a magnetocaloric refrigeration unit. It will be appreciated that such embodiments may be applied to other applications, like magnetocaloric refrigeration or cooling or heat-pump systems, which require cooling of an electromagnet structure. Embodiments presented herein are described solely for the purpose of illustration. Persons skilled in the art will recognize from this description that the embodiments presented herein may be practiced with modifications and alterations limited only by the spirit and scope of the appended claims.

Various aspects and embodiments of the present invention are defined by the following numbered clauses:

1. An assembly comprising:

   a magnetocaloric core;

   at least one electromagnet coil wound around the magnetocaloric core; and

   one or more magnetic yokes having a top surface and a bottom surface disposed at longitudinal ends of the magnetocaloric core, wherein at least one of the top surface and the bottom surface has disposed thereon a micro-channel structure, and wherein the magnetic yokes are thermally coupled to the electromagnet coil and are thermally isolated from the magnetocaloric core.

2. The assembly of clause 1, wherein the micro-channel structure comprises a non-magnetic material.

3. The assembly of clause 1 or clause 2, wherein the electromagnet coil is thermally isolated from the magnetocaloric core.

4. The assembly of any preceding clause, wherein the micro-channel structure comprises at least one of a spiral micro-channel, a radial micro-channel, and a plurality of closely disposed studs or pins.

5. The assembly of any preceding clause, further comprises a flow regulating module for regulating a coolant flow through the micro-channel structure.

6. The assembly of any preceding clause, wherein the one or more magnetic yokes comprise at least one of a plurality of fins disposed thereon, and one or more heat pipe structures coupled to the one or more magnetic yokes.

7. The assembly of any preceding clause, further comprises one or more coolant tubes thermally coupled to the electromagnet coil.

8. The assembly of any preceding clause, further comprises a flow regulating module for regulating a coolant flow through the coolant tubes.

9. The assembly of any preceding clause, further comprises one or more manifolds coupled to the coolant tubes.

10. The assembly of any preceding clause, further comprises one or more manifolds coupled to the micro-channel structure.

11. The assembly of any preceding clause, wherein the cooling structure comprises at least one of a micro-channel structure, a fin structure, and a heat pipe structure.

12. An assembly comprising:

   one or more magnetocaloric cores;

   at least one electromagnet coil wound around the one or more magnetocaloric cores, wherein the one or more electromagnet coils are thermally isolated from the one or more magnetocaloric cores;

   a coil housing disposed around the one or more electromagnet coils, the coil housing comprising a cooling structure disposed thereon, and wherein the coil housing comprises a magnetic material.

13. The assembly of clause 12, further comprises one or more coolant tubes thermally coupled to the electromagnet coil.

14. The assembly of clause 12 or clause 13, further comprises a flow regulating module for regulating a coolant flow through the coolant tubes.

15. The assembly of any of clauses 12 to 15, further comprises one or more manifolds coupled to the coolant tubes.

16. The assembly of any of clauses 12 to 15, wherein the cooling structure comprises at least one of a micro-channel structure, a fin structure, or a heat pipe structure.

17. A system comprising:

   a magnetocaloric heat pump comprising

   one or more magnetocaloric cores;

   at least one electromagnet coil wound around the one or more magnetocaloric cores; and

   an electromagnet cooling structure for extracting waste heat from the one or more electromagnet coils, thermally coupled to the at least one electromagnet coil and thermally isolated from the one or more magnetocaloric cores;

   a source heat exchanger thermally coupled to the one or more magnetocaloric cores;

a sink heat exchanger thermally coupled to the one or more magnetocaloric cores;

an energizing module for supplying a time varying electrical current to the one or more electromagnet coils; and

a waste heat disposal module coupled to the electromagnet cooling structure for rejecting the waste heat to environment.

18. The system of clause 17, wherein the electromagnet cooling structure comprises at least one of a micro-channel structure, a fin structure, and a heat pipe structure, disposed on at least one of a coil housing, and a magnetic yoke.

19. The system of any of clauses 17 to 18, wherein the electromagnet cooling structure comprises one or more coolant tubes thermally coupled to the at least one electromagnet coil.

20. The system of any of clauses 17 to 19, wherein the waste heat disposal module comprises:

one or more manifolds coupled to the electromagnet cooling structure; and

a flow regulating module for regulating a coolant flow through the electromagnet cooling structure.

**Claims**

1. An assembly (100, 400) comprising:

a magnetocaloric core (102, 402);
at least one electromagnet coil (104, 406) wound around the magnetocaloric core; and
one or more magnetic yokes (106, 408) having a top surface and a bottom surface disposed at longitudinal ends of the magnetocaloric core (102, 402), wherein at least one of the top surface and the bottom surface has disposed thereon a micro-channel structure (202), and wherein the magnetic yokes (106, 408) are thermally coupled to the at least one electromagnet coil (104, 406) and are thermally isolated from the magnetocaloric core (102, 402).

2. The assembly (100, 400) of claim 1, wherein the one or more magnetic yokes (104, 406) comprise at least one of a plurality of fins disposed thereon, and one or more heat pipe structures coupled to the one or more magnetic yokes.

3. The assembly (100, 400) of claim 1 or claim 2, further comprises one or more coolant tubes thermally coupled to the electromagnet coil.

4. The assembly of any preceding claim, further comprises a flow regulating module for regulating a coolant flow through the micro-channel structure.

5. The assembly of any preceding claim, further comprises a flow regulating module for regulating a coolant flow through the coolant tubes.

6. The assembly of any preceding claim, further comprises one or more manifolds coupled to the coolant tubes.

7. The assembly of any preceding claim, further comprises one or more manifolds coupled to the micro-channel structure.

8. The assembly of any preceding claim, wherein the cooling structure comprises at least one of a micro-channel structure, a fin structure, and a heat pipe structure.

9. An assembly (100, 400) comprising:

one or more magnetocaloric cores (102, 402);
at least one electromagnet coil (104, 406) wound around the one or more magnetocaloric cores (102, 402), wherein the one or more electromagnet coils (104, 406) are thermally isolated from the one or more magnetocaloric cores (102, 402);
a coil housing (108, 410) disposed around the one or more electromagnet coils, the coil housing (108, 410) comprising a cooling structure disposed thereon, and wherein the coil housing (108, 410) comprises a magnetic material.

10. The assembly (100, 400) of claim 9, further comprises one or more coolant tubes (304) thermally coupled to the electromagnet coil (104, 406).

11. The assembly (100, 400) of claim 10, further comprises a flow regulating module for regulating a coolant flow through the coolant tubes (304).

12. The assembly (100, 400) of any of claims 9 to 11, wherein the cooling structure comprises at least one of a micro-channel structure, a fin structure, or a heat pipe structure.

13. A system (1600) comprising:

a magnetocaloric heat pump (1602) comprising one or more magnetocaloric cores (1604);
at least one electromagnet coil (1606) wound around the one or more magnetocaloric cores

**EP 2 420 762 A2**

(1604); and

an electromagnet cooling structure (1608) for extracting waste heat from the at least one electromagnet coil (1606), thermally coupled to the one or more electromagnet coils (1606) and thermally isolated from the one or more magnetocaloric cores (1604);

a source heat exchanger (1610) thermally coupled to the one or more magnetocaloric cores (1604);

a sink heat exchanger (1612) thermally coupled to the one or more magnetocaloric cores (1604);

an energizing module (1614) for supplying a time varying electrical current to the one or more electromagnet coils; and

a waste heat disposal module (1616) coupled to the electromagnet cooling structure (1608) for rejecting the waste heat to environment.

**14.** The system of claim 13, wherein the electromagnet cooling structure comprises at least one of a microchannel structure, a fm structure, and a heat pipe structure, disposed on at least one of a coil housing, and a magnetic yoke.

**15.** The system of claim 13 or claim 14, wherein the electromagnet cooling structure comprises one or more coolant tubes thermally coupled to the one or more electromagnet coils.

**FIG. 1**

FIG. 2

*FIG. 3*

**FIG. 4**

**FIG. 5**

**FIG. 6**

**FIG. 7**

**FIG. 8**

**FIG. 9**

**FIG. 10**

FIG. 11

FIG. 12

FIG. 13

FIG. 14

FIG. 15

**FIG. 16**

EP 2 420 762 A2